# EUROPEAN PATENT APPLICATION

(11) **EP 4 810 187 A1**
(43) Date of publication of application: **23.09.2026**
(21) Application number: 25164065.2
(22) Date of filing: 17.03.2025
(51) Int. Cl.: B23K 26/08, B23K 26/38, B23K 37/02

(54) **DEVICE FOR LASER CUTTING ELONGATE WORK PIECES**

(71) Applicant: HGG International B.V., 1771 SW Wieringerwerf (NL)
(72) Inventor: Kistemaker, Jacob Pieter, 1733 BD Nieuwe Niedorp (NL)
(74) Representative: 't Jong, Bastiaan Jacob

(57) **Abstract**

The invention relates to a device for laser cutting elongate work pieces, which device comprises:
- a frame with a passage opening for feeding in a feed direction an elongate work piece through said passage opening;
- a circular guide arranged on the frame wherein the axis of the circular guide is parallel to the feed direction of the work piece;
- a serial manipulator mounted with its base on the circular guide and movable along the circular guide;
- a laser tool manipulated by the serial manipulator; and
- a shield arranged on the circular guide opposite of the base of the serial manipulator, which shield extends partially along the circular direction of the guide and which shield extends parallel to the axis of the circular guide.

## Description

The invention relates to a device for laser cutting elongate work pieces, which device comprises:
- a frame with a passage opening for feeding in a feed direction an elongate work piece through said passage opening;
- a circular guide arranged on the frame wherein the axis of the circular guide is parallel to the feed direction of the work piece;
- a serial manipulator mounted with its base on the circular guide and movable along the circular guide;
- a laser tool manipulated by the serial manipulator.

Such a device is for example known from WO 02096594. In this device a serial manipulator with a laser tool is moved along a circular guide around an elongate work piece, such that the laser tool can cut the elongate work piece.

When cutting through the work piece, the laser beam of the laser tool will typically exit the work piece on the opposite side. As the focal point is at a relative large distance from the tip of the laser tool, the exiting laser beam could cause damage to parts beyond the work piece. Especially when using high power laser beams, which is common for cutting thick walled elongate profiles, the damage to the surroundings could be substantial when the laser beam is directed to a single point for a longer period of time.

As the serial manipulator with the laser tool is rotated along the circular track around the work piece, the exiting laser beam can be directed in any direction. This will require a laser beam resistant housing, which fully encloses the device. Because the protective housing should also be suited to accommodate elongate work pieces, the cost for providing suitable protection will be substantial.

It is an object of the invention to reduce or even remove the above mentioned disadvantages.

This object is achieved with a device according to the preamble, which is characterized by a shield arranged on the circular guide opposite of the base of the serial manipulator, which shield extends partially along the circular direction of the guide and which shield extends parallel to the axis of the circular guide.

With the device according to the invention, the shield is positioned opposite of the serial manipulator with the laser tool. During cutting of an elongate work piece, the the shield will catch the laser beam exiting from the work piece.

The shield extends in both the circular direction as the direction parallel to the axis of the circular guide, such that when the laser tool is positioned under a different angle relative the work piece, the shield will still catch the exiting laser beam.

In a preferred embodiment of the device according to the invention the shield moves along the circular guide in unison with the base of the serial manipulator.

When the base of the serial manipulator is rotated around the work piece the shield will move along, such that the shield is kept on the opposite side of the work piece to catch the exiting laser beam.

In another embodiment of the device according to the invention the device comprises means for changing the angular offset of the center of the shield relative to the base of the serial manipulator.

By changing the angular offset it can easily be prevented that the exiting laser beam is directed too long at a single point of the shield, which could damage the shield. By changing the offset, the heat of the caught laser beam is distributed over a larger area.

Another advantage of changing the offset is that when the shield is positioned below the work piece and a cut piece falls down on the shield, the shield can be rotated away, while the serial manipulator is kept in position.

Preferably, the offset of the center of the shield relative to the base of the serial manipulator is between 135° and 225°.

Similarly, it is possible to change the offset in feed direction of the center of the shield relative to the base of the serial manipulator. Also by changing the offset in feed direction, the heat of the caught laser beam is distributed over a larger area.

If a six axis serial manipulator is used, the laser tool could be held in a steady position, while the base is rotating along the circular guide. This also allows for the shield to be moved to reduce the heat input at a single point and to let cut piece to slide off the heat shield.

Another embodiment of the device according to the invention comprises cooling means for cooling the shield. For example channels are provided in the shield or at the back along which channels a coolant can be circulated to discharge heat generated by an exiting laser beam.

Yet another preferred embodiment of the device according to the invention further comprises a controller for controlling the movements of the laser tool manipulated by the serial manipulator, wherein the controller takes into account the dimensions of the shield and the angular position of the shield along the circular track relative to the base of the serial manipulator; and
wherein the controller is configured to limit the angle of the laser tool to ensure that the laser beam of the laser tool is always directed to a part of the shield.

As the shield is arranged on the circular guide on a known position relative to the base of the serial manipulator, the controller can easily calculate whether in a certain position of the laser tool, the laser beam will be caught by the shield.

These limits can be taken into account when moving the laser tool along the elongate work piece to ensure that the serial manipulator together with the laser tool will assume a posture in which the work piece is cut as desired and the exiting laser beam will be caught by the shield.

These and other features of the invention will be elucidated in conjunction with the accompanying drawings.
Figure 1 shows a perspective view of an embodiment of a device according to the invention.
Figures 2A and 2B show a side view of the device according to figure 1 in two different positions.
Figure 3 shows a top view of the device of figure **1****.**
Figure 4 shows an alternative of the device of figure 1 in the position shown in figure **2B****.**

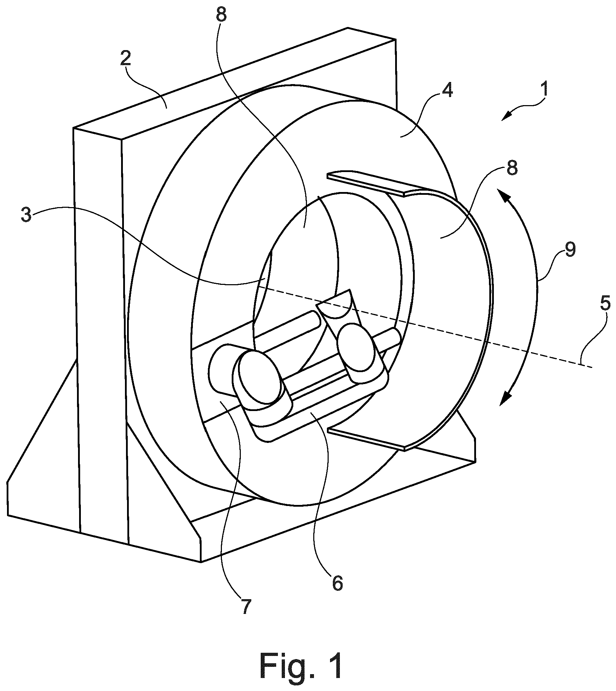

Figure 1 shows a device 1 for laser cutting elongate work pieces. The device 1 has a frame 2 with a passage opening 3. A circular guide 4 with an axis 5 is arranged on the frame 2. A serial manipulator 6 is mounted with its base 7 to the circular guide 4 such that the serial manipulator 6 can be rotated around the passage opening 3.

A shield 8 is arranged opposite of the base 7 to the circular guide 4. The shield extends parallel to the axis 5 of the circular guide and extends partially along the circular direction 9 of the guide 4.

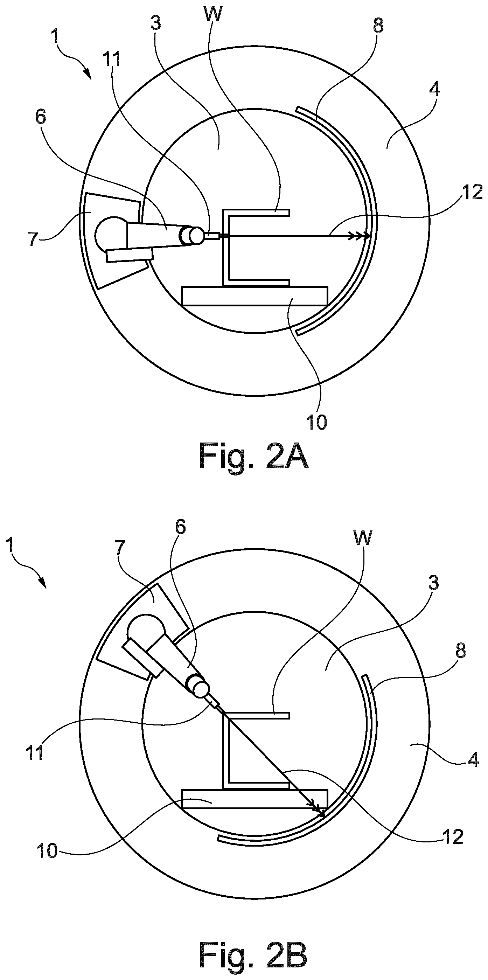

Figure 2A shows a side view of the device 1 as shown in figure 1. An elongate work piece W with a C-shaped cross-section is supported on support rollers 10 in the passage opening 3 of the device 1.

The serial manipulator 6 manipulates a laser tool 11 to cut the work piece W. The laser beam 12 exits the work piece W and is caught by the shield 8 arranged on the opposite side of the base 7 of the manipulator 6.

When, as shown in figure 2B, the base 7 is rotated along the circular guide 4 to cut along the circumference of the work piece W, the shield is rotated in unison, such that the laser beam 12 is still being caught by the shield 8.

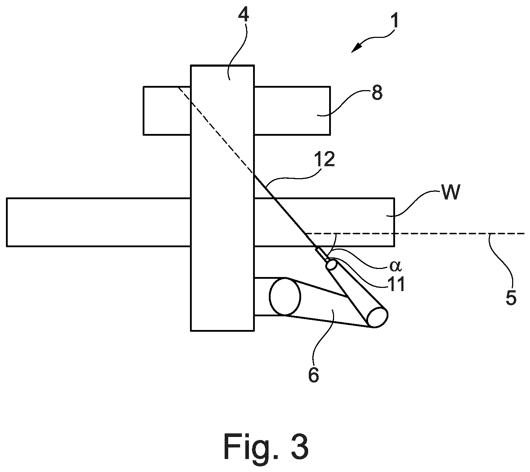

Figure 3 shows a top view of the device 1. The laser tool 11 is manipulated by the serial manipulator 6 under an angle α with the axis 5. The laser beam 12 is directed through the passage opening through which the work piece W extends. As the shield 8 also extends parallel to the axis 5, the exiting laser beam 12 is still caught by the shield 8.

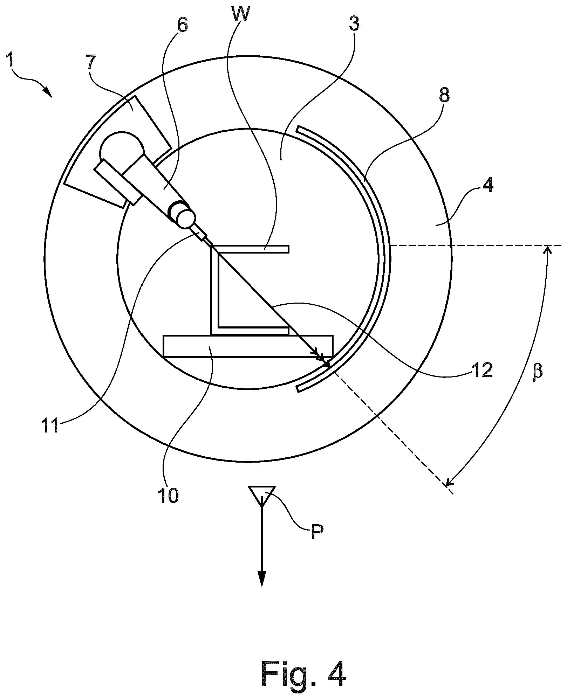

Figure 4 shows an alternative of the device of figure 1 in the position shown in figure 2B. In this alternative, the angular offset of the shield 8 can be changed. As shown in figure 4, the angular offset of the shield 8 is changed by an angle β, such that a cut piece P can fall freely without being hindered by the shield 8.

Changing the offset of the shield 8 relative to the base 7 of the serial manipulator 6 also allows for the heat of the caught laser beam 12 to be distributed along the shield 8.

## Claims

1. Device for laser cutting elongate work pieces, which device comprises:
- a frame with a passage opening for feeding in a feed direction an elongate work piece through said passage opening;
- a circular guide arranged on the frame wherein the axis of the circular guide is parallel to the feed direction of the work piece;
- a serial manipulator mounted with its base on the circular guide and movable along the circular guide;
- a laser tool manipulated by the serial manipulator;
**characterized by**
- a shield arranged on the circular guide opposite of the base of the serial manipulator, which shield extends partially along the circular direction of the guide and which shield extends parallel to the axis of the circular guide.

2. Device according to claim 1, wherein the shield moves along the circular guide in unison with the base of the serial manipulator.

3. Device according to claim 1 or 2, wherein the device comprises means for changing the angular offset of the center of the shield relative to the base of the serial manipulator.

4. Device according to claim 3, wherein the offset of the center of the shield relative to the base of the serial manipulator is between 135° and 225°.

5. Device according to any of the preceding claims, further comprising cooling means for cooling the shield.

6. Device according to any of the preceding claims, further comprising a controller for controlling the movements of the laser tool manipulated by the serial manipulator, wherein the controller takes into account the dimensions of the shield and the angular position of the shield along the circular track relative to the base of the serial manipulator; and
wherein the controller is configured to limit the angle of the laser tool to ensure that the laser beam of the laser tool is always directed to a part of the shield.
